# FASCICULE DE BREVET EUROPEEN

(11) **EP 0 452 462 B1**
(45) Date de publication et mention de la délivrance du brevet: **22.12.1993**
(21) Numéro de dépôt: 90916762.9
(22) Date de dépôt: 31.10.1990
(51) Int. Cl.: H02B 1/044

(54) **APPAREIL ELECTRIQUE DE COMMANDE ET/OU DE SIGNALISATION DESTINE A ETRE FIXE DANS UNE OUVERTURE D'UNE PAROI**
ELEKTRISCHES BEFEHLS- UND/ODER MELDEGERÄT ZUR BEFESTIGUNG IN EINER WANDÖFFNUNG
ELECTRIC CONTROL AND/OR APPARATUS TO BE FIXED IN A PANEL OPENING

(30) Priorité: 08.11.1989 FR 8914659
(43) Date de publication de la demande: 23.10.1991
(73) Titulaire: TELEMECANIQUE, 92504 Rueil Malmaison Cedex (FR)
(72) Inventeur: GENDRE, Michel, François, F-16340 L'Isle-d'Espagnac (FR); RABOU, François, F-16000 Angoulême (FR)
(74) Mandataire: Derambure, Christian
(86) Numéro de dépôt international: FR9000788
(87) Numéro de publication internationale: WO9107790

(56) Documents cités:
- EP-A- 330 956
- DE-B- 1 114 880
- DE-B- 1 121 685

## Description

L'invention se rapporte à un appareil électrique de commande et/ou de signalisation tel que bouton-poussoir ou voyant, comprenant un fût cylindrique creux destiné à traverser une ouverture d'une paroi support, une collerette débordante solidaire du fût et pouvant s'appliquer sur une face externe de la paroi, une embase réceptrice liée à un bloc électrique et recevant de façon amovible l'extrémité du fût opposée à la collerette, et des moyens de pression à vis associés à cette embase et pouvant s'appliquer sur la face interne de la paroi pour assurer la fixation de cet ensemble à la paroi lorsque ces moyens à vis sont actionnés du côté de l'embase opposé à la collerette (voir EP-A- 33 09 56).

La fréquence d'utilisation de ces appareils auxiliaires, qui apparaissent de manière répétée dans les platines, tableaux ou pupitres de commande de toutes tailles d'installations électriques pour permettre l'établissement d'un dialogue avec les installations ou machines aux circuits électriques desquelles ils sont associés, apporte régulièrement à l'installateur des problèmes, qui seraient considérés comme mineurs lors de l'installation d'un nombre réduit de ceux-ci, mais dont la répétitivité constitue un inconvénient lorsque l'on se trouve confronté à des variations importantes d'échelle.

Dès que la taille des tableaux ou platines dépasse quelques décimètres, il devient, en effet, impossible de confier à un seul installateur la tâche de fixer les organes en question dans les ouvertures circulaires prévues à cet effet. De plus, et même si un accès aisé permet à un seul installateur de procéder à une première mise en place, il faut, dans tous les cas, tenir compte des différences d'épaisseurs des tôles de tableaux ainsi que de la grande densité de ces organes sur une surface où l'accès à chacun d'eux doit être assuré soit pour la finition du montage proprement dit, soit pour l'exécution ultérieurement d'un éventuel remplacement d'organes défectueux.

La simplicité des moyens de fixation et de rattrapage d'épaisseur, la rapidité avec lesquels ceux-ci devront être mis en oeuvre, ainsi que la qualité du serrage devant assurer la permanence de la fixation sont donc considérés, à juste titre, comme des éléments de choix déterminants.

La multiplicité même des moyens proposés à ce jour pour résoudre ces problèmes indique bien, par ailleurs, que les propositions de moyens susceptibles de répondre d'une façon techniquement économique et humainement rentable aux impératifs mentionnés ci-dessus, n'ont pas encore été couronnées de succès.

On a ainsi proposé des moyens de fixation dans lesquels un écrou est vissé sur une portion filetée interne du fût sans pouvoir garantir que la permanence de son serrage soit totalement établie, et sans pouvoir assurer un accès aisé lorsque l'appareil concerné se trouve placé entre des appareils voisins. De plus, une encoche doit fréquemment être disposée à la périphérie de l'ouverture pour effectuer le blocage angulaire du fût en cours de serrage. On a également proposé, soit d'associer à l'embase réceptrice une bride munie de deux trous filetés équipés de vis de pression destinées à s'appliquer contre la face arrière du tableau, soit de munir directement cette embase de trous filetés équivalents (voir DE-B- 111 4880). Ces moyens, qui ont prouvé leur efficacité, présentent, d'une part, l'inconvénient d'établir un serrage déséquilibré susceptible de compromettre la résistance mécanique de l'embase, et entraînent, d'autre part, une inévitable réduction de la surface utile de celle-ci, puisque sa fonction est également vouée à la réception de multiples interrupteurs, de voyants, de transformateurs réducteurs ou de résistances chutrices de tension.

L'invention se propose de fournir des moyens de fixation équilibrée pour un appareil électrique ou organe de tableau du type mentionné ci-dessus, en recourant à des pièces constituantes en nombre réduit, de mise en oeuvre simple et de faible coût.

Elle a pour autre but de reporter les efforts de serrage sur l'embase et non sur le bloc électrique.

Elle a aussi pour but de limiter la surface de la région de la paroi support destinée à recevoir l'embase.

Suivant l'invention, l'appareil de commande et/ou de signalisation est caractérisé en ce que les moyens de pression à vis comprennent un levier comportant deux branches qui s'étendent de part et d'autre du fût et présentent chacune une arête pouvant s'appliquer sur la face arrière de la paroi support, le levier étant monté de façon pivotante avec au moins un degré de liberté dans l'embase de façon que, quand il pivote, les branches s'appliquent par pivotement sur ladite face arrière, et une vis unique montée dans l'embase et commandant le pivotement du levier par appui contre celui-ci.

On constate que l'appareil selon l'invention comprend des pièces faciles à fabriquer et à monter et en très petit nombre.

La solution proposée se prête à la réalisation de variantes dont le choix dépend de la volonté de l'utilisateur d'utiliser des appareils faisant appel à des embases en matériaux synthétiques isolants, ou en matériaux métalliques conducteurs afin que soit simultanément ou non opérée la mise à la masse de certaines parties de l'appareil, ou de la préconisation de matériaux ayant une résistance mécanique particulière.

L'invention, ainsi que ses différentes variantes seront mieux comprises à la lecture de la description ci-dessous et à l'examen des figures annexées qui l'accompagnent en illustrant :
- à la figure 1, une vue extérieure en élévation et coupe partielle d'un appareil selon l'invention, fixé à la paroi d'un tableau,
- à la figure 2, une vue de dessus du même appareil dépourvu du fût normalement associé à l'embase ;
- à la figure 3, une vue de côté de l'embase de l'appareil selon les figures 1 et 2 dépourvue de fût et de la collerette ;
- aux figures 4, 5 et 6, des vues analogues aux figures 1, 2, 3 montrant une variante de réalisation ;
- à la figure 7, une vue de dessous d'une embase dérivée de la précédente ;
- à la figure 8, une vue en élévation et coupe partielle d'un appareil comportant l'embase selon la figure 7 ;
- à la figure 9, une vue de côté d'une variante de réalisation de la vis de serrage montée dans l'appareil ;
- à la figure 10, une vue en perspective éclatée d'une variante de réalisation du levier et de l'embase ; et
- à la figure 11 une vue en élévation et coupe partielle de cette variante.

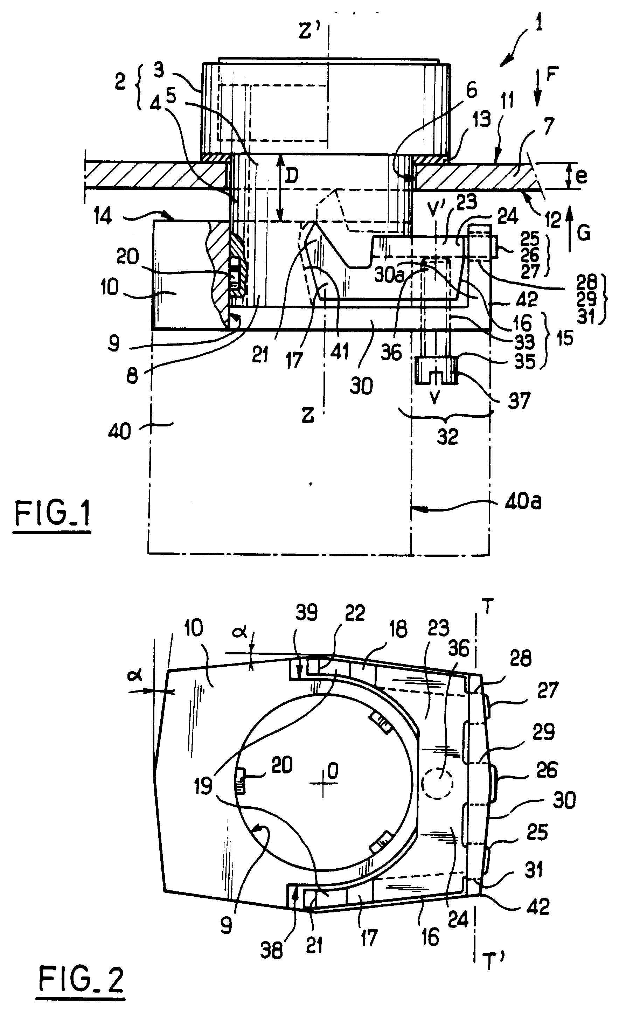

L'appareil de commande et/ou de signalisation 1 représenté à la figure 1 comprend un corps présentant une collerette débordante externe 3 et un fût 4 sensiblement cylindrique de moindre diamètre. La portion 5 du fût qui est contiguë à la collerette est engagée dans une ouverture circulaire 6 d'une paroi 7 d'un tableau ou d'une platine d'épaisseur e, ou plus généralement d'une plaque ou paroi mince de support, tandis que la portion d'extrémité 8 du fût 4 est engagée dans un alésage 9 d'une embase réceptrice 10. Cet engagement utilise des moyens d'accouplement amovibles non représentés en détail (tels que par exemple un dispositif à baïonnette 20) afin que le fût 4 puisse être introduit du côté de la face avant 11 de la platine suivant le sens F et que l'embase 10 puisse lui être ensuite associée en sens opposé G vers la face arrière 12 de cette platine.

Un joint d'étanchéité en élastomère déformable 13 est disposé entre la collerette 3 et la face avant de la platine avec l'interposition éventuelle d'une étiquette non représentée.

Sur l'embase réceptrice 10 sont disposés ou fixés, selon le cas, soit des interrupteurs, si la collerette 3 est équipée d'un bouton-poussoir actionné de l'extérieur, soit un bloc pour fonction lumineuse si la collerette est équipée d'un cabochon transparent coloré ou non afin de conférer à l'appareil la fonction d'un voyant. Ces auxiliaires sont représentés en traits tiretés par la référence 40. Rien n'empêche par ailleurs de disposer une lampe directement dans l'embase 10 en regard de l'alésage 9 ou même dans le fût 4.

Lorsque l'embase 10 est rendue solidaire du fût 4 et donc de la collerette 3, une distance D de l'ordre de 8 mm par exemple, sépare leurs surfaces en regard afin que la fixation puisse être opérée à travers des ouvertures 6 de platine d'épaisseurs différentes et comprises par exemple entre 1 et 6 mm.

L'espace résiduel subsistant entre la face arrière 12 de la platine et la face 14 de l'embase 10 dirigée vers elle doit donc être comblé pour assurer simultanément la fixation de l'appareil et une compression convenable du joint d'étanchéité 13.

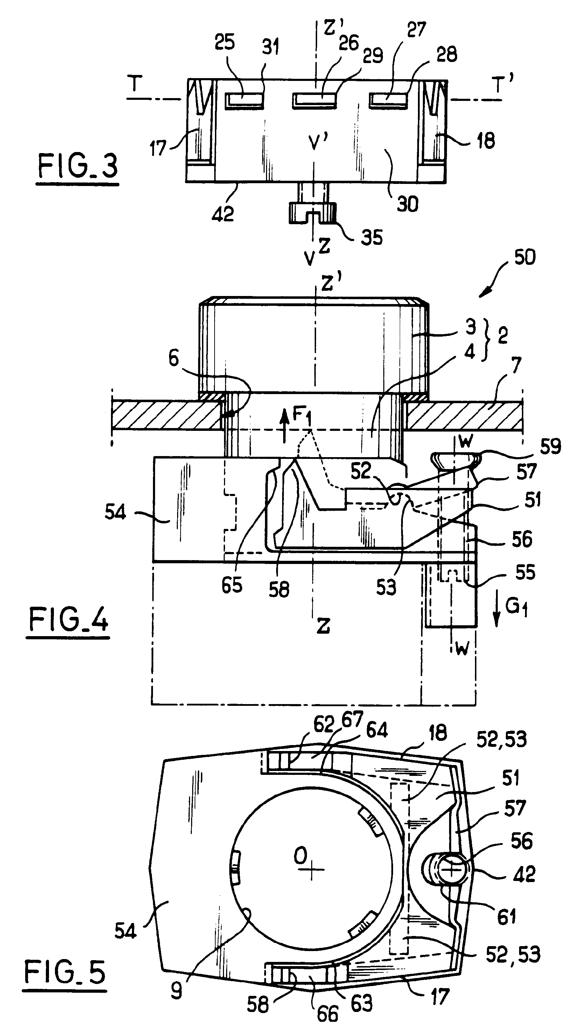

Les moyens 15 mis en oeuvre à cette fin comprennent d'abord un levier 16 qui est maintenu dans l'embase 10 et qui présente une section en forme de U dont deux branches prolongées 17, 18 (voir figure 2) formant une fourche 19, sont respectivement munies d'arêtes vives 21, 22 dirigées vers la face arrière 12 de la platine 7. Vers celle-ci est également dirigée la traverse 23 reliant les branches 17, 18 du levier. L'extrémité 24 du levier 16 qui est opposée aux arêtes 21,22 présente au moins un, et de préférence plusieurs tenons 25, 26, 27 qui viennent s'engager avec jeu dans des mortaises 28, 29, 31 ménagées à une extrémité longitudinale 42 de l'embase 10 (voir également la figure 3). Selon la nature du matériau de l'embase 10, les mortaises 28, 29, 31 peuvent venir directement de l'embase ou être disposées par exemple dans la portion repliée 30a d'une équerre métallique 30 qui est fixée sur l'embase 10, éventuellement par surmoulage. L'axe fictif -TT'- passant par les tenons et mortaises précitées et perpendiculaire à l'axe ZZ' du fût 4, constitue un axe de pivotement du levier 16.

L'embase 10 présente d'autre part dans une région 32 comprise entre les mortaises 28, 29, 31 et l'axe de symétrie ZZ' sensiblement commun à celle-ci et au fût 4, une ouverture filetée 33 d'axe VV' sensiblement paralléle au précédent à travers laquelle est engagée une vis 35 dont l'extrémité mobile 36 vient en regard de la traverse 23 du levier 16 et dont la tête opposée 37, munie de moyens d'accouplement tels que six pans ou fentes de tournevis, est dirigée en sens inverse. Il va de soi que les équipements complémentaires 40 de l'embase 10 tels que des blocs pour fonction lumineuse ou interrupteurs, présentent les dégagements nécessaires 40a pour permettre d'accéder à la tête de cette vis 35.

Comme on le voit notamment sur la figure 2, les arêtes 21, 22 du levier 16 sont sensiblement placées de façon diamétrale par rapport au centre O de l'alésage 9 de l'embase et leur écartement est choisi, d'une part, pour ne pas venir toucher le fût 4 et d'autre part, pour ne pas sortir latéralement du cadre défini par le contour sensiblement rectangulaire de l'embase 10.

Ainsi qu'on le voit également sur cette figure 2, un contour légèrement incliné de façon symétrique (voir angles α) a été donné à chacun des côtés de l'embase 10 afin de faciliter la mise en place de celle-ci lorsqu'elle doit être montée entre deux embases déjà installées sur le tableau 7 ou la platine.

Par conséquent, pour que les branches 17, 18 du levier 16 puissent suivre également ce contour, celles-ci doivent être logées dans des dégagements latéraux opposés (38, 39) de l'embase. Des parois limites de ces dégagements telles que 41 qui empêchent un dégagement des tenons 25, 27 en dehors des mortaises (28 ... 31) permettent d'assurer l'imperdabilité du levier 16, éventuellement en combinaison avec une conformation particulière des tenons.

Le fonctionnement des moyens de serrage, c'est-à-dire de la vis 35 est basé sur le principe d'un levier amplificateur de mouvement dans lequel une rotation communiquée à la vis 35 provoque l'application de son extrémité 36 contre la traverse 23 (éventuellement pourvue d'une empreinte locale) puis le déplacement angulaire du levier de serrage 16 dont les tenons 25, 26, 27 prennent appui dans les mortaises 28, 29, 31 jusqu'au moment où, quand la rotation est suffisante, les arêtes 21, 22 du levier viennent rencontrer la face arrière 12 du tableau 7 ou de la platine en procurant un serrage axial très efficace en même temps qu'une garantie contre une éventuelle rotation du fût 4 et de l'embase 10 déjà angulairement associés. Une pénétration de ces arêtes 21, 22 dans la surface d'une platine métallique peut être exploitée pour opérer une mise à la masse d'un circuit électrique.

Dans la disposition qui vient d'être décrite, le point d'appui de la vis 35 sur le levier 16 est situé entre l'axe ZZ' et l'extrémité longitudinale 42 de l'embase 10, ce qui peut constituer une limitation du volume dévolu aux appareils ou organes auxiliaires 40 fixés ultérieurement sur l'embase 10.

Si l'on souhaite donner à ces organes auxiliaires un volume plus important, on devra donc reporter aussi loin que possible du centre de l'embase 10 et de l'axe ZZ, et donc aussi près que possible de l'extrémité longitudinale 42 de l'embase, l'axe VV' de la vis de serrage 35.

Un appareil 50 répondant à ce besoin est représenté à la figure 4. Dans ce mode de réalisation, un levier de serrage 51 de forme générale comparable au levier précédent est pourvu d'une rainure ou encoche transversale 52 perpendiculaire à l'axe ZZ' (voir figure 5) venant s'engager sur une nervure 53 de même direction portée par l'embase 54. Une vis de serrage 55 d'axe WW' parallèle à l'axe ZZ' est engagée dans un trou fileté 56 de l'embase 54 qui est éloigné le plus possible de l'axe ZZ', de sorte que la nervure 53 et l'encoche 52 (faisant ici office de pivot) se trouvent placées entre les axes ZZ' et WW'. Compte tenu de cette disposition, une traction suivant le sens G₁ opposé à la platine 7 doit être ici exercée sur l'extrémité 57 du levier 51 pour provoquer un déplacement en sens F1 des arêtes 58, 62 situées à ses extrémités. Ce mouvement et la communication de l'effort correspondant qu'il faudra appliquer, sont obtenus grâce à un épanouissement de forme 59 qui est ménagé à l'extrémité de la vis 55 proche de la platine 7 et qui est engagé dans une fourche 61 (ou dans une ouverture ovalisée de forme voisine) portée par l'extrémité 57 du levier. Afin de ne pas désorienter l'utilisateur, la vis de serrage 55 sera avantageusement pourvue d'un filetage à gauche. Dans cette réalisation, également des dégagements 63, 64 latéraux de l'embase 54 reçoivent les branches 66, 67 du levier 51 pour ne pas sortir du périmètre de celle-ci. Des talons, tels que 65, de ces dégagements (voir figure 4) rendent le levier 51 imperdable.

Il est clair que des dispositions voisines et que des aménagements pourraient être apportés aisément par l'homme de l'art, notamment par substitution de moyens équivalents pour matérialiser les points d'appui ou axes de pivotement des leviers, ou pour conférer à l'épanouissement 59 de la vis 55 une forme distincte avec une éventuelle interposition de rondelles d'adaptation.

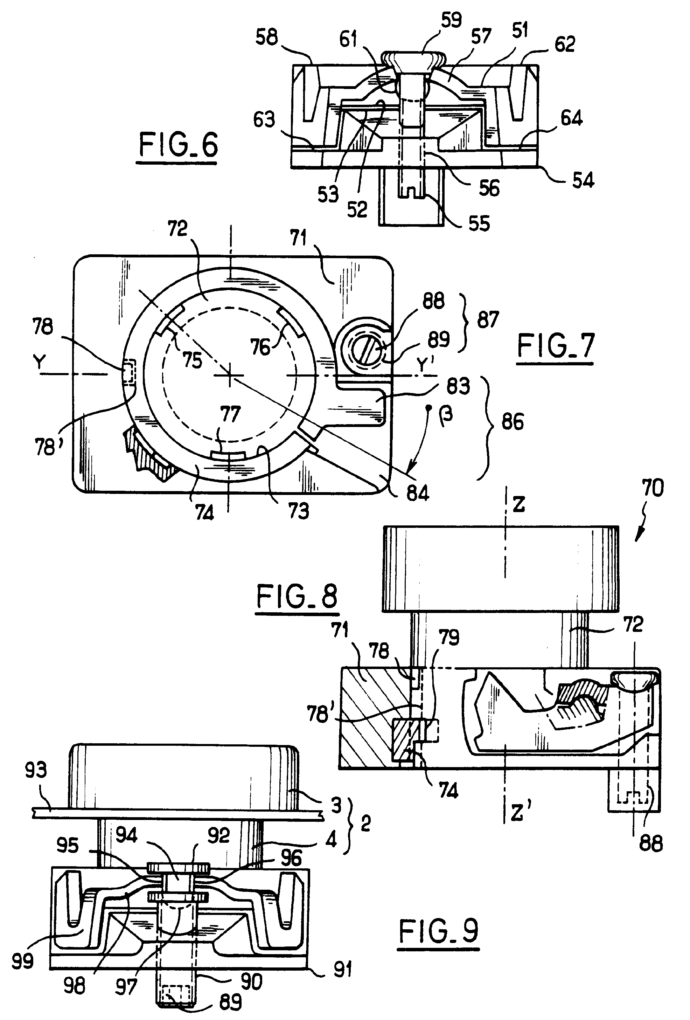

Dans le cas de la réalisation selon la figure 9, la vis de serrage 90 est pourvue d'une empreinte à six pans creux 89 engagée dans une embase 91 et présentant à son extrémité 92 dirigée vers la platine ou le tableau 93 une gorge annulaire 94 dans laquelle pénètrent les deux rebords opposés 95, 96 d'une encoche ouverte 97 ménagée à l'extrémité 98 d'un levier 99 comparable à celui qui est illustré aux figures 4 à 6.

Accessoirement, on pourrait donner aux différentes vis des longueurs supérieures à celles qui sont représentées afin que l'accès à des moyens de serrage tels que clés ou tournevis soient rendus plus aisés, ou encore utiliser une vis et un écrou orientable pour communiquer aux leviers les mouvements de bascule nécessaires à l'obtention de l'effet de serrage.

Bien que les bras 17, 18 de la fourche du levier 16, ou ceux du levier 51, aient été présentés dans les exemples représentés sous la forme de bords repliés à 90° et en sens opposé à la platine 7 de part et d'autre d'une région centrale 23, on conçoit que ces pliages pourraient en variante adopter d'autres directions moyennant une adaptation corrélative de l'embase, si par exemple cette région centrale n'était plus disposée du côté de la platine.

Dans l'appareil 70 représenté sur les figures 7 et 8, dérivé de celui qui est illustré aux figures 4 à 6, on se propose de mettre à la disposition du personnel de montage un appareil de tableau dans lequel les moyens de serrage décrits ci-dessus, ainsi que des moyens d'accouplement amovibles entre le fût et l'embase seront disposés au voisinage immédiat l'un de l'autre de façon à rendre plus rapide l'ensemble de ces deux opérations successives et à réduire le volume nécessaire pour accéder aux organes correspondants.

Dans l'exemple de la figure 7, l'embase 71 présente une forme rectangulaire en raison du fait que le montage du fût 72 dans l'alésage 73 de l'embase 71 ne nécessite aucune rotation de celle-ci. Les moyens d'accouplement amovibles comprennent dans cette réalisation une couronne 74 qui est solidaire de l'embase 71 tout en pouvant pivoter autour de l'axe ZZ' de celle-ci. Cette couronne 74 présente par exemple des dents (telles que 75, 76, 77), qui pénètrent dans des portions de gorges de fût 72 telles que 79 (voir figure 8), lorsqu'une rotation d'amplitude β est communiquée à celle-ci à l'aide d'une petite manette 83 qui en est solidaire. Des ergots internes de l'embase 71 tels que 78 assurent la solidarité angulaire de l'embase 71 et du fût 72 grâce à une rainure 78' de celui-ci.

La manette 83 vient se loger dans un dégagement 84 de l'embase 71 situé dans une zone 86, qui est décalée par rapport à un axe de symétrie longitudinal YY' et opposée à une seconde zone qui est décalée en sens inverse par rapport à l'axe YY' pour recevoir une vis de serrage 88 qui est engagée dans un filetage 89. La fonction de cette vis 88 est comparable à celle des vis 35 ou 55 décrites précédemment.

Si l'on substitue à la couronne 74 d'autres éléments d'accouplement, tels qu'un coin ou un verrou élastique latéral, leurs moyens de préhension seront toujours disposés dans la zone 86 mentionnée ci-dessus.

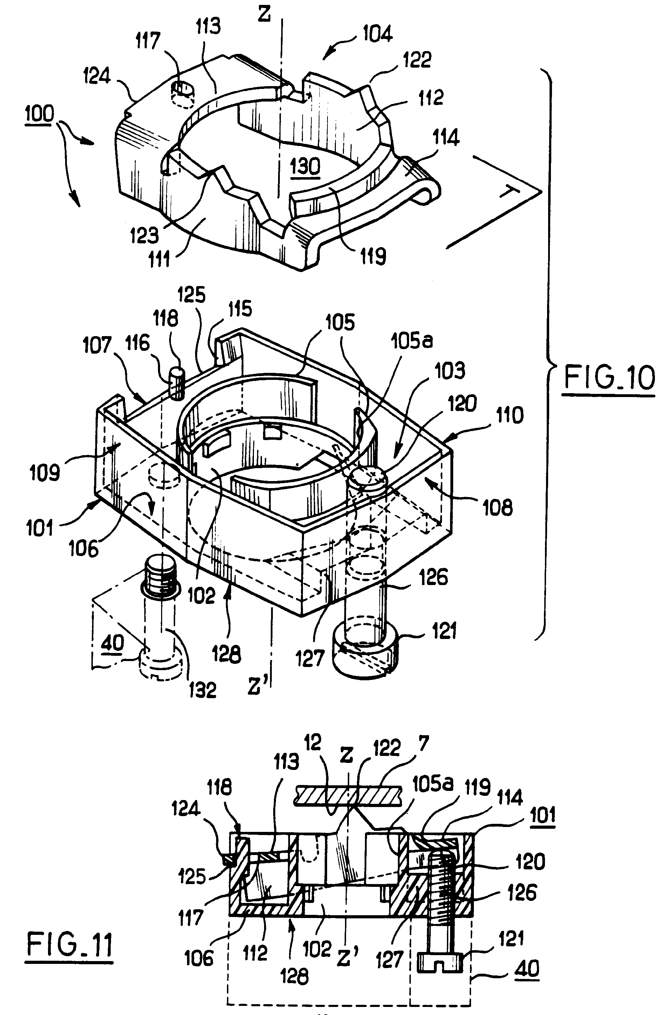

Selon un mode de réalisation avantageux 100 (voir figure 10), une embase 101, présentant comme précédemment un alésage 102 propre à recevoir un fût identique au fût 4, est conformée pour recevoir dans un logement 103 périphérique un levier de serrage 104. Ce logement qui est compris entre un col 105 solidaire du fond 106 et des parois latérales 107, 108, 109, 110 qui sont perpendiculaires au col, donne par suite à l'embase l'allure d'un caisson ayant une grande rigidité grâce à la présence de ces parois.

Le levier 104 qui est comme précédemment réalisé par découpage et pliage d'une tôle d'épaisseur appropriée aux efforts à transmettre, ne comporte pas comme précédemment des branches ayant des extrémités libres, mais deux branches 111, 112 qui sont reliées entre elles à leurs extrémités par des traverses 113, 114, qui se trouvent sensiblement perpendiculaires à un plan T passant par ces deux traverses, et qui laissent subsister entre elles un passage 130 qui viendra entourer le col 105.

La paroi 107 présente un dégagement 115 dont la région médiane est occupée par un téton 116 qui est apte à pénétrer dans une ouverture oblongue 117 de la traverse 113 lorsque le levier 104 est placé dans le logement 103, et qui sert à maintenir ce levier en place tout en autorisant son basculement, par exemple grâce à un léger écrasement de son extrémité 118 (voir figure 11).

La seconde traverse 114, qui est raidie par un pli 119 dont le contour reste voisin d'une portion 105a du col 105, se prolonge pour venir en regard d'une extrémité 120 d'une vis de serrage 121 sensiblement parallèle à l'axe ZZ' de l'alésage.

En se reportant à la figure 11, on remarque que le point d'appui 124 du levier 104 sur le dégagement 115 est opposé à la traverse 114 recevant l'extrémité 120 de la vis, par rapport à l'axe ZZ' du col 105 ; on constate ainsi que le mode d'action de ce levier 104 permet de transmettre aux arêtes 122, 123 des branches des efforts de serrage amplifiés associés à un déplacement d'amplitude inférieure à celle de l'extrémité 120 de la vis 121, tandis que, dans les figures précédentes, les déplacements des arêtes étaient multipliés par rapport à ceux de la vis de serrage.

On constate également que le levier 104 représenté aux figures 10 et 11 est monté avec deux degrés de liberté par rapport à l'embase 101, alors que les leviers 16 et 51 sont montés avec un seul degré de liberté par rapport à l'embase correspondante 10, 54.

Au cours d'une opération de serrage, une extrémité saillante 124 de la traverse 113 vient s'appuyer sur le fond 125 du dégagement 115 lorsque les arêtes 122, 123 arrivent au contact de la face arrière 12 d'une cloison 7.

Afin d'assurer un guidage convenable de la vis 121, le trou fileté 126 qui la reçoit est ménagé dans une surépaisseur 127 qui est solidaire du fond 106 et qui se trouve donc en saillie dans le logement 103.

Le fond 106 qui a été représenté ici de façon simplifiée comporte sur sa face arrière 128 des moyens d'accrochage ou de fixation tels qu'une vis 132 pour recevoir, comme la face 42 de l'embase 10, un bloc électrique 40 tel qu'un interrupteur, ou des moyens de signalisation, ou encore une combinaison de ces derniers.

Alors que le levier métallique 104 fait appel à un procédé de découpage et de pliage de tôle très économique, l'embase métallique 101 doit pour sa part faire appel à un procédé de moulage par injection un peu plus onéreux compte tenu de la complexité de ses formes.

## Revendications

1. Appareil électrique de commande et/ou de signalisation tel que bouton-poussoir ou voyant, comprenant un fût cylindrique creux (4, 72) destiné à traverser une ouverture (6) d'une paroi support (7, 93), une collerette débordante (3) solidaire du fût pouvant s'appliquer sur une face externe (11) de la paroi, une embase (10, 54, 71, 91, 101) liée à un bloc électrique (40) et recevant de façon amovible l'extrémité du fût opposée à la collerette (3), et des moyens de pression à vis (35, 55, 88, 90, 121) associés à cette embase et pouvant s'appliquer sur la face interne (12) de la paroi (7, 93) pour assurer la fixation de cet ensemble à la paroi lorsque ces moyens à vis sont actionnés du côté de l'embase opposé à la collerette, caractérisé en ce que les moyens de pression à vis comprennent un levier (16, 51, 99, 104) comportant deux branches (17, 18 ; 66, 67 ; 111, 112) qui s'étendent de part et d'autre du fût et présentent chacune une arête (21, 22 ; 58, 62 ; 122, 123) pouvant s'appliquer sur la face arrière (12) de la paroi support (7), le levier (16, 51, 99, 104) étant monté de façon pivotante avec au moins un degré de liberté dans l'embase (10, 54, 71, 91, 101) de manière que, quand il pivote, les branches (17, 18 ; 66, 67 ; 111, 112) s'appliquent par pivotement sur ladite face arrière (12), et une vis unique (33, 55, 88, 90, 121) montée dans l'embase et commandant le pivotement du levier par appui contre celui-ci.

2. Appareil électrique de commande et/ou de signalisation selon la revendication 1, caractérisé en ce que le levier (51) comporte sur une face orientée vers l'embase (54) un élément d'appui en forme de gorge (52) qui est appuyé sur une nervure (53) de cette embase située entre l'axe (ZZ') du fût (4) et une extrémité longitudinale (42) de l'embase, cette dernière comportant un filetage (56) dans lequel est engagée une vis de serrage (55) dont un épanouissement d'extrémité (59) pénètre dans un prolongement (57) du levier (51) opposé aux deux arêtes (58, 62) ménagées à l'extrémité de celui-ci.

3. Appareil électrique de commande et/ou de signalisation selon la revendication 1, caractérisé en ce que le levier (16) comporte une extrémité (24) qui est opposée aux arêtes (21, 22) et dont au moins un tenon (25), (26), (27) est engagé dans au moins un évidement ou mortaise (28), (29), (31) porté par un prolongement longitudinal (30a) de l'embase (10), la vis (35) étant engagée dans un filetage (33) de cette embase disposé entre la (les) mortaise(s) ou évidement(s) et l'axe de symétrie (ZZ') du fût (4) et de l'embase (10).

4. Appareil électrique de commande et/ou de signalisation selon l'une des revendications 1 à 3, caractérisé en ce que le levier (16, 51, 99, 104) est constitué par une pièce métallique présentant deux rebords (17, 18 ; 66, 67 ; 111, 112) reliés entre eux par au moins une traverse (23 ; 57 ; 113, 114) et cambrés à 90° par rapport à la traverse, les rebords et la traverse étant logés avec jeu dans des dégagements (38, 39 ; 63, 64 ; 103) bordés par des parois de retenue autorisant leur mouvement et leur maintien dans l'embase.

5. Appareil électrique de commande et/ou de signalisation selon la revendication 4, caractérisé en ce que l'embase (101) forme un caisson délimité par des parois de retenue (107, 108, 109, 110).

6. Appareil électrique de commande et de signalisation selon l'une des revendications 1 à 5, caractérisé en ce que la vis de serrage (88) est engagée dans un filetage (89) d'une embase sensiblement rectangulaire (71), qui se trouve décalé par rapport à l'axe de symétrie (YY') de celle-ci afin de dégager une zone opposée (86) qui est dévolue à la réception d'un élément d'accouplement (83), destiné à permettre l'association du fût (72) et de l'embase (71).

7. Appareil électrique de commande et/ou de signalisation selon l'une des revendications 1 ou 4, caractérisé en ce que la vis de serrage (55) prend appui sur l'embase (54) grâce à une tête (59) traversant une ouverture de celle-ci, une extrémité opposée de cette vis étant engagée dans un écrou angulairement solidaire d'une extrémité de levier opposée aux arêtes.

8. Appareil électrique de commande et/ou de signalisation selon l'une des revendications 1 à 6, caractérisé en ce que le levier (104) est une pièce métallique découpée et pliée.

9. Appareil électrique de commande et/ou de signalisation selon la revendication 8, caractérisé en ce que la pièce découpée et pliée (104) coopère avec l'embase (101) au moyen d'un téton (118) et d'une ouverture oblongue (117).

## Claims

1. Electrical control and/or indicator device such as a pushbutton or lamp comprising a hollow cylindrical bush (4, 72) adapted to be passed through an opening (6) in a supporting wall (7, 93), a projecting flange (3) attached to the bush adapted to be applied to an outside surface (11) of the wall, a socket (10, 54, 71, 91, 101) joined to an electrical assembly (40) and removably receiving the end of the bush opposite the flange (3), and screw pressure means (35, 55, 88, 90, 121) associated with said socket and adapted to be applied to the inside surface (12) of the wall (7, 93) to fix said assembly to the wall when said screw means are operated from the end of the socket opposite the flange, characterised in that the screw pressure means comprise a lever (16, 51, 99, 104) having two branches (17, 18; 66, 67; 111, 112) on respective opposite sides of the bush and each having an edge (21, 22; 58, 62; 122, 123) adapted to be applied to the rear surface (12) of the supporting wall (7), the lever (16, 51, 99, 104) being pivotably mounted with at least one degree of freedom in the socket (10, 54, 71, 91, 101) so that when it pivots the branches (17, 18; 66, 67; 111, 112) pivot into engagement with said rear surface (12), and a single screw (33, 55, 88, 90, 121) mounted in the socket and causing pivoting of the lever by bearing against the latter.

2. Electrical control and/or indicator device according to claim 1 characterised in that the lever (51) has on a side facing towards the socket (54) a bearing member in the form of a groove (52) pressed against a rib (53) of said socket between the axis (ZZ') of the bush (4) and a longitudinal end (42) of the socket, the latter having a screwthread (56) in which is inserted a clamping screw (55) an enlarged end (59) of which passes through an extension (57) of the lever (51) opposite the two edges (58, 62) at the end of the latter.

3. Electrical control and/or indicator device according to claim 1 characterised in that the lever (16) has an end (24) opposite the edges (21, 22) and at least one tenon (25), (26), (27) is engaged in at least one opening or mortice (28), (29), (31) carried by a longitudinal extension (30a) of the socket (10), the screw (35) being inserted in a screwthread (33) of said socket disposed between the mortice(s) or recess(es) and the axis of symmetry (ZZ') of the bush (4) and the socket (10).

4. Electrical control and/or indicator device according to any one of claims 1 to 3 characterised in that the lever (16, 51, 99, 104) comprises a metal part having two lips (17, 18; 66, 67; 111, 112) joined by at least one crosspiece (23; 57; 113; 114) and bent at 90° to the crosspiece, the lips and the crosspiece being housed with clearance in recesses (38, 39; 63, 64; 103) flanked by retaining walls enabling them to move and retaining them in the socket.

5. Electrical control and/or indicator device according to claim 4 characterised in that the socket (101) forms a box section delimited by retainer walls (107, 108, 109, 110).

6. Electrical control and/or indicator device according to any one of claims 1 to 5 characterised in that the clamping screw (88) is inserted in a screwthread (89) of a substantially rectangular socket (71) which is offset relative to the axis of symmetry (YY') of the latter in order to free an opposite area (86) for receiving a coupling member (83) adapted to enable association of the bush (72) and the socket (71).

7. Electrical control and/or indicator device according to claim 1 or claim 4 characterised in that the clamping screw (55) bears on the socket (54) through a head (59) passing through an opening in the latter, an opposite end of said screw being engaged in a nut prevented from rotating relative to an end of the lever opposite the edges.

8. Electrical control and/or indicator device according to any one of claims 1 to 6 characterised in that the lever (104) is a stamped and bent metal part.

9. Electrical control and/or indicator device according to claim 8 characterised in that the stamped and bent part (104) cooperates with the socket (101) by means of a pin (118) and an oblong opening (117).

## Patentansprüche

1. Elektrisches Steuer- und/oder Anzeigegerät wie Druckknopf oder Anzeigelampe, umfassend eine hohle zylindrische Buchse (4, 72), die dazu bestimmt ist, eine Öffnung (6) einer Tragwand (7, 93) zu durchqueren, einen überstehenden Kragen (3), der mit der Buchse fest verbunden ist und an einer Außenfläche (11) der Wand anliegen kann, einen Sockel (10, 54, 71, 91, 101), der mit einem elektrischen Block (40) verbunden ist und lösbar das dem Kragen (3) entgegengesetzte Ende der Buchse (3) aufnimmt, und Schrauben-Druckmittel (35, 55, 88, 90, 121), die diesem Sockel zugeordnet sind und an der Innenfläche (12) der Wand (7, 93) anliegen können, um die Befestigung dieser Einheit an der Wand zu gewährleisten, wenn die Schraubenmittel auf der dem Kragen entgegengesetzten Seite des Sockels betätigt sind, dadurch gekennzeichnet, daß die Schrauben-Druckmittel einen Hebel (16, 51, 99, 104) umfassen, der zwei Schenkel (17, 18; 66, 67; 111, 112) umfaßt, die sich zu beiden Seiten der Buchse erstrecken und jeweils eine Kante (21, 22; 58, 62; 122, 123) aufweisen, die an der Rückseite (12) der Tragwand (7) anliegen kann, wobei der Hebel (16, 51, 99, 104) schwenkbar mit wenigstens einem Freiheitsgrad im Sockel (10, 54, 71, 91, 101) montiert ist, so daß, wenn er verschwenkt, die Schenkel (17, 18; 66, 67; 111, 112) durch Verschwenken an diese Rückseite (12) zum Anliegen kommen, sowie eine einzige Schraube (33, 55, 88, 90, 121), die im Sockel montiert ist und die Verschwenkung des Hebels durch Abstützung an diesem steuert.

2. Elektrisches Steuer- und/oder Anzeigegerät nach Anspruch 1, dadurch gekennzeichnet, daß der Hebel (51) auf einer dem Sockel (54) zugewandten Seite ein nutenförmiges Abstützungselement (52) umfaßt, das sich auf einer Rippe (53) dieses Sockels abstützt, die zwischen der Achse (ZZ') der Buchse (4) und einem Längsende (42) des Sockels gelegen ist, wobei dieser ein Gewinde (56) besitzt, in das eine Klemmschraube (55) eingesetzt ist, deren Endverdickung (59) in eine Verlängerung (57) des Hebels (51) eintritt, die den beiden am Ende des Hebels vorgesehenen Kanten (58, 62) entgegengesetzt ist.

3. Elektrisches Steuer- und/oder Anzeigegerät nach Anspruch 1, dadurch gekennzeichnet, daß der Hebel (16) ein Ende (24) besitzt, das den Kanten (21, 22) entgegengesetzt ist und von dem wenigstens ein Zapfen (25), (26), (27) in wenigstens eine Aussparung oder ein Zapfenloch (28, 29, 31) eintritt, das an einer Längsverlängerung (30a) des Sockels (10) vorgesehen ist, wobei die Schraube (35) in ein Gewinde (33) dieses Sockels eintritt, das zwischen der bzw. den Zapfenlöchern oder Aussparungen und der Symmetrieachse (ZZ') der Buchse (4) und des Sockels (10) angeordnet ist.

4. Elektrisches Steuer- und/oder Anzeigegerät nach einem der Ansprüche 1 bis 3, dadurch gekennzeichnet, daß der Hebel (16, 51, 99, 104) aus einem metallischen Teil besteht, das zwei Randleisten (17, 18; 66, 67; 111, 112) aufweist, die miteinander durch wenigstens einen Steg (23; 57; 113, 114) verbunden sind und bezüglich des Stegs um 90° abgewinkelt sind, wobei die Randleisten und der Steg mit einem Spiel in Ausnehmungen (38, 39; 63, 64; 103) sitzen, die durch Rückhaltewände umrandet sind, die ihre Bewegung und ihren Halt im Sockel gewährleisten.

5. Elektrisches Steuer- und/oder Anzeigegerät nach Anspruch 4, dadurch gekennzeichnet, daß der Sockel (101) einen durch Rückhaltewände (107, 108, 109, 110) abgegrenzten Kasten formt.

6. Elektrisches Steuer- und/oder Anzeigegerät nach einem der Ansprüche 1 bis 5, dadurch gekennzeichnet, daß die Klemmschraube (88) in ein Gewinde (89) eines im wesentlichen rechteckigen Sockels (71) eingesetzt ist, das bezüglich dessen Symmetrieachse (YY') versetzt ist, so daß eine entgegengesetzte Zone (86) freigelegt ist, die für die Aufnahme eines Kupplungselements (83) bestimmt ist, das dazu bestimmt ist, die Verbindung der Buchse (72) und des Sockels (71) zu gestatten.

7. Elektrisches Steuer- und/oder Anzeigegerät nach einem der Ansprüche 1 oder 4, dadurch gekennzeichnet, daß die Klemmschraube (55) dank eines Kopfes (59), der eine Öffnung des Sockels durchquert, sich auf dem Sockel (54) abstützt, wobei ein entgegengesetztes Ende dieser Schraube in einer Mutter sitzt, die winkelmäßig mit einem den Kanten entgegengesetzten Ende des Hebels fest verbunden ist.

8. Elektrisches Steuer- und/oder Anzeigegerät nach einem der Ansprüche 1 bis 6, dadurch gekennzeichnet, daß der Hebel (104) ein ausgeschnittenes und gebogenes Metallteil ist.

9. Elektrisches Steuer- und/oder Anzeigegerät nach Anspruch 8, dadurch gekennzeichnet, daß das ausgeschnittene und gebogene Teil (104) mit dem Sockel (101) mit Hilfe eines Zapfens (118) und einer länglichen Öffnung (117) zusammenwirkt.
